Europäisches Patentamt

European Patent Office

Office européen des brevets

(11) Veröffentlichungsnummer: **0 299 202**
**A1**

(12) **EUROPÄISCHE PATENTANMELDUNG**

(21) Anmeldenummer: 88109224.1

(22) Anmeldetag: 09.06.88

(51) Int. Cl.⁴: **B65G 17/06**

(30) Priorität: 16.07.87 DE 3723591

(43) Veröffentlichungstag der Anmeldung:
**18.01.89 Patentblatt 89/03**

(84) Benannte Vertragsstaaten:
**DE ES FR GB IT**

(71) Anmelder: **Gebr. Hennig GmbH**
**Dorfstrasse 41**
**D-8045 Ismaning(DE)**

(72) Erfinder: **Stöhr, Albert**
**Am Wiegenberg 8**
**D-8015 Markt Schwaben(DE)**

(74) Vertreter: **Tetzner, Volkmar, Dr.-Ing. Dr. jur.**
**Van-Gogh-Strasse 3**
**D-8000 München 71(DE)**

(54) **Späneförderer.**

(57) Die Erfindung betrifft einen Späneförderer, bei dem die Glieder des Scharnierbandes (1) an ihren quer zur Förderrichtung verlaufenden Kanten über die ganze Breite des Scharnierbandes (1) durchlaufende Gelenkachsteile (9b, 9c) aufweisen, von denen der eine mit einer teilzylindrischen Außenfläche (9b') und der andere mit einer komplementär ausgebildeten, teilzylindrischen Innenfläche (9c') versehen ist. Ein derartiger Späneförderer zeichnet sich durch eine besonders einfache Fertigung des Scharnierbandes (1) aus.

EP 0 299 202 A1

## Späneförderer

Die Erfindung betrifft einen Späneförderer entsprechend dem Oberbegriff des Anspruches 1.

Bei den bisher bekannten Späneförderern der im Oberbegriff des Anspruches 1 genannten Art sind die Scharnierbandglieder an ihren quer zur Förderrichtung verlaufenden Kanten mit in Abständen voneinander angeordneten Buchsen versehen, die zur Aufnahme eines Gelenkbolzens dienen. In die Zwischenräume zwischen benachbarten Buchsen an einer Kante eines Scharnierbandgliedes greifen jeweils die Buchsen des benachbarten Scharnierbandgliedes ein.

Die Herstellung dieser bekannten Scharnierbandglieder erfolgt in der Weise, daß zunächst in einem ersten Arbeitsgang die einzelnen Scharnierbandglieder mit den zur Bildung der Gelenkbuchsen bestimmten Ansätzen aus Bandmaterial ausgestanzt werden, worauf dann in einem zweiten Arbeitsgang die Ansätze zu Buchsen rundgebogen werden. Die Fertigung dieser Scharnierbandglieder ist somit recht aufwendig.

Der Erfindung liegt daher die Aufgabe zugrunde, einen Späneförderer der im Oberbegriff des Anspruches 1 vorausgesetzten Art so auszubilden, daß die Fertigung der Scharnierbandglieder wesentlich vereinfacht wird.

Diese Aufgabe wird erfindungsgemäß durch die kennzeichnenden Merkmale des Anspruches 1 gelöst. Zweckmäßige Ausgestaltungen der Erfindung sind Gegenstand der Unteransprüche.

Erfindungsgemäß weisen somit die Scharnierbandglieder an ihren quer zur Förderrichtung verlaufenden Kanten über die ganze Breite des Scharnierbandes durchlaufende Gelenkachsteile auf, von denen der eine mit einer teilzylindrischen Außenfläche und der andere mit einer komplementär ausgebildeten, teilzylindrischen Innenfläche versehen ist.

Indem benachbarte Scharnierbandglieder mit ihren teilzylindrisch und komplementär gestalteten Flächen der Gelenkachsteile übereinandergreifen, ergibt sich eine einfache Gelenkachsverbindung, die keinen durchgehenden Achsbolzen benötigt.

Die Fertigung der Scharnierbandglieder des erfindungsgemäßen Späneförderers kann ferner auf besonders einfache Weise mittels kontinuierlicher Prägung (insbesondere Rollenprägung) von Bandmaterial erfolgen.

Einige Ausführungsbeispiele der Erfindung sind in der Zeichnung schematisch veranschaulicht. Es zeigen

Fig. 1 eine teilweise geschnittene Aufsicht auf einen Teil eines erfindungsgemäßen Späneförderers,

Fig. 2 und 3 Schnitt und Aufsicht eines Scharnierbandgliedes,

Fig. 4 und 5 Schemadarstellungen einiger Scharnierbandglieder in unterschiedlichen Schwenkstellungen,

Fig. 6 einen Schnitt durch eine abgewandelte Ausführung einer Laschenkette,

Fig. 7 und 8 Schemadarstellungen weiterer Varianten der Laschenkette,

Fig. 9 und 10 Schnitte durch zwei Ausführungsbeispiele des Späneförderers, von denen der eine als Kratzerförderer (Fig. 9) und der andere als Bandförderer (Fig. 10) ausgebildet ist.

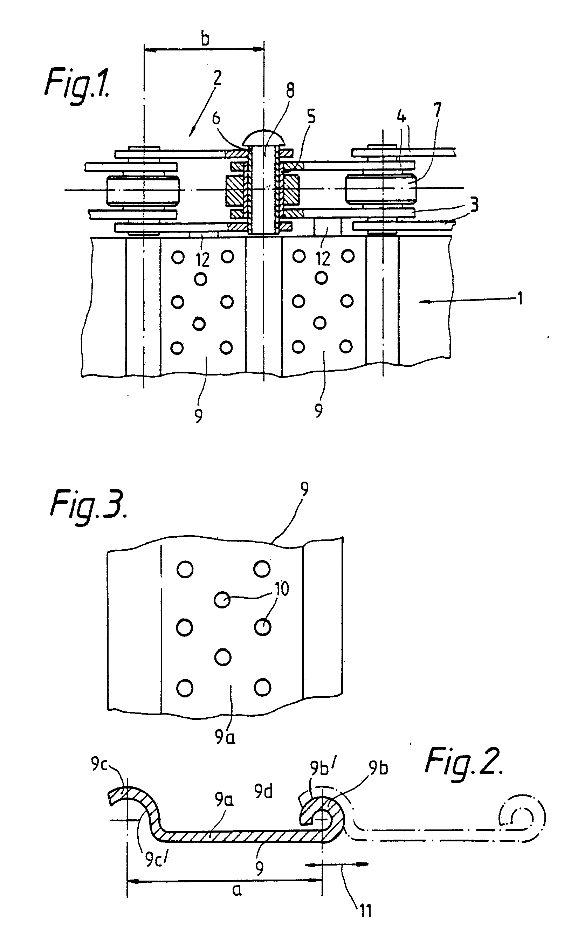

Der in den Fig. 1 bis 5 in seinen wesentlichen Elementen dargestellte Späneförderer besteht aus einem Scharnierband 1 und zwei seitlichen Laschenketten 2 (von denen in Fig. 1 nur eine Laschenkette sichtbar ist).

Die Laschenketten 2 enthalten innere Laschen 3, äußere Laschen 4, Buchsen 5 und 6 zur paarweisen Verbindung der inneren und äußeren Laschen, Rollen 7, die auf den Buchsen 5 drehbar gelagert sind, sowie in den Buchsen 6 angeordnete Kunststoffbolzen 8. Die Buchsen 5 sind auf den koaxial hierzu angeordneten Buchsen 6 drehbar, so daß aufeinanderfolgende Glieder der Laschenketten eine Schwenkbewegung gegeneinander ausführen können, wenn der Späneförderer seine Richtung ändert.

Das Scharnierband 1 besteht aus einzelnen, gleichartig ausgebildeten Scharnierbandgliedern 9, deren Aufbau insbesondere aus den Fig. 2 und 3 hervorgeht.

Der mittlere Bereich 9a der Scharnierbandglieder 9 ist mit Durchbrüchen 10 versehen, durch die an den geförderten Spänen anhaftende Flüssigkeit abtropfen kann. An den beiden quer zur Förderrichtung (Pfeil 11 in Fig. 2) verlaufenden Kanten weisen die Scharnierbandglieder 9 Gelenkachsteile 9b, 9c auf, die über die ganze Breite des Scharnierbandes 1 durchlaufen. Der Gelenkachsteil 9b ist mit einer teilzylindrischen Außenfläche 9b$'$ und der Gelenkachsteil 9c mit einer komplementär ausgebildeten, teilzylindrischen Innenfläche 9c$'$ versehen. Benachbarte Scharnierbandglieder 9 greifen dabei in der aus Fig. 2 ersichtlichen Weise in- bzw. übereinander.

Der Achsabstand a zwischen den Gelenkachsteilen 9b, 9c der einzelnen Scharnierbandglieder 9 entspricht dem Achsabstand b der Laschenketten 2, wobei die Gelenkachsen von Scharnierband 1 und Laschenketten 2 in ihrer Lage zusammenfallen.

Die Scharnierbandglieder 9 sind mit der ihnen benachbarten inneren Lasche 3 verbunden, was beispielsweise durch Verschweißen, Verschrauben oder Vernieten erfolgen kann. In Fig. 1 sind zur Verbindung der Scharnierbandglieder 9 mit den Laschen 3 dienende Ansätze 12 schematisch angedeutet.

Die inneren Laschen 3 der beiden Laschenketten 2 bilden zugleich die Seitenborde des Scharnierbandes 1. Die einzelnen Scharnierbandglieder 9 sind damit über diese inneren Laschen 3 mit den beiden Laschenketten 2 und miteinander verbunden.

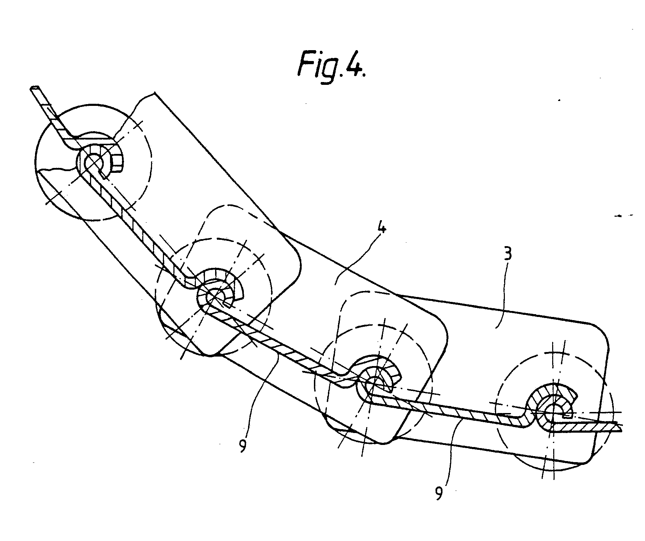

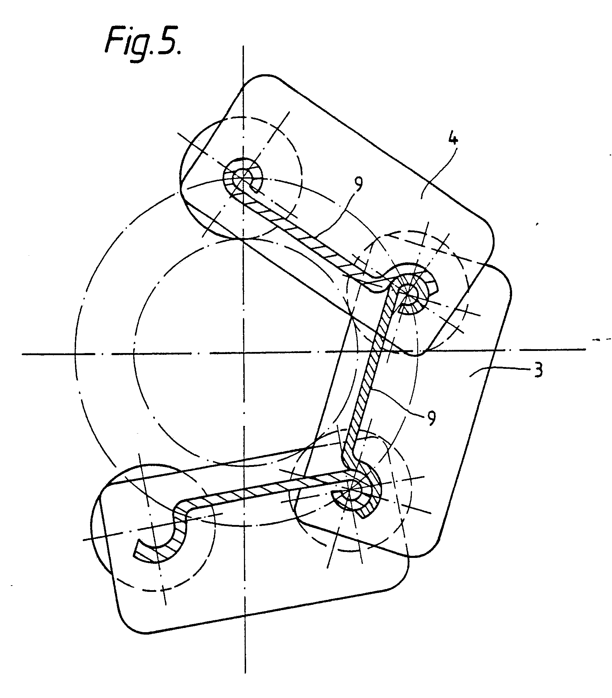

Die Fig. 4 und 5 veranschaulichen die Relativlage aufeinanderfolgender Glieder des Späneförderers bei einer Umlenkbewegung in der einen oder anderen Richtung: In Fig. 4 ist die Oberfläche des Späneförderers leicht konkav gekrümmt, während Fig. 5 die Verhältnisse in der Umlenkzone (bei stark konvexer Krümmung) veranschaulicht. Die Gelenkachsteile 9b, 9c der Scharnierbandglieder 9 ermöglichen in beiden Fällen eine klemm- und verkantungsfreie Schwenkbewegung der einzelnen Glieder des Späneförderers.

Bei dem dargestellten Ausführungsbeispiel sind benachbarte Scharnierbandglieder 9 nur über die beiden Laschenketten 2 miteinander verbunden, wobei eine zusätzliche Gelenkführung durch die lose aufeinanderliegenden, komplementär zueinander ausgebildeten Gelenkachsteile 9b, 9c gegeben ist. Es fehlen damit durchgehende Gelenkbolzen, was eine wesentliche Vereinfachung der Konstruktion und eine erhebliche Gewichtsverringerung bedeutet.

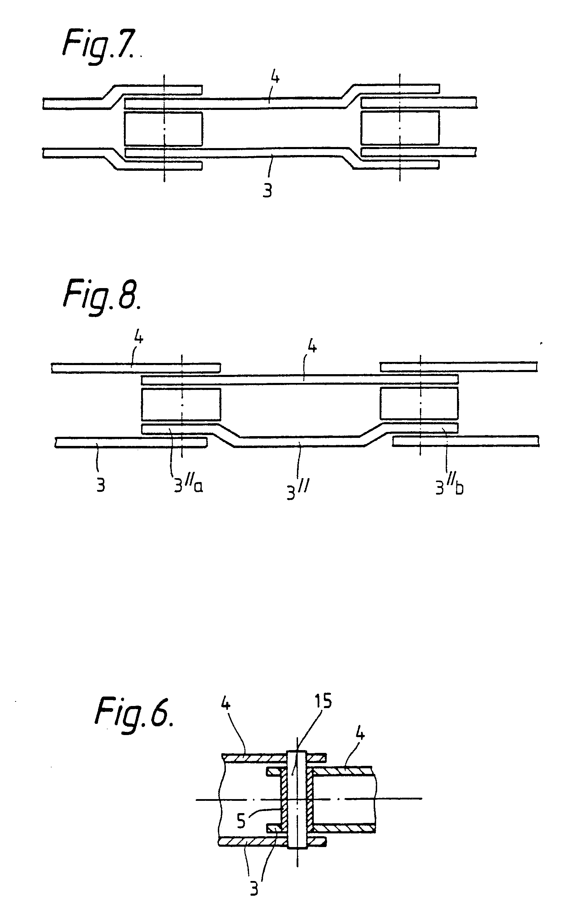

Bei dem in Fig. 6 dargestellten Ausführungsbeispiel einer gleichfalls für den erfindungsgemäßen Späneförderer geeigneten Laschenkette sind die inneren und äußeren Laschen 3, 4 über eine Buchse 5 bzw. einen diese Buchse 5 durchsetzenden und relativ zu ihr drehbaren Bolzen 15 miteinander verbunden. Die Scharnierbandglieder 9 sind in Fig. 7 nicht veranschaulicht. Ihr Aufbau und ihre Verbindung mit den Laschen spricht der zuvor erläuterten Ausführungsform.

Wie Fig 2 zeigt, weisen die mit einer teilzylindrischen Außenfläche 9' versehenen Gelenkachsteile 9b der Scharnierbandglieder 9 einen annähernd zylindrischen Innenraum 9d auf. In die Enden dieses Innenraumes 9d kann je ein Gelenkachsteil der beiden Laschenketten eingreifen, beispielsweise der Kunst stoffbolzen 8 gemäß Fig. 1 oder der Bolzen 15 gemäß Fig. 6. Hierdurch wird eine zusätzliche Zentrierung der aufeinander gleitenden teilzylindrischen Flächen 9b', 9c' geschaffen.

Zur Verbindung der Laschen im Bereich der Gelenkstellen können auch Bolzenschrauben Verwendung finden, die in mit Gewinde versehene, warzenartige Ausdrückungen der Laschen eingeschraubt werden. Der Kopf dieser Bolzenschrauben kann dabei - ebenso wie der Kopf des Kunststoffbolzens 8 - zur seitlichen Lagebegrenzung des Späneförderers innerhalb des Gehäuses dienen.

Weiterhin ist es im Rahmen der Erfindung selbstverständlich auch möglich, die Scharnierbandglieder 9 ohne die Durchbrüche 10 auszuführen.

Bei dem Ausführungsbeispiel gemäß Fig. 1 sind die Laschen 3, 4 der beiden Laschenketten 2 eben ausgebildet. Dadurch ergeben sich - wie Fig. 1 zeigt - unterschiedlich große Zwischenräume zwischen den Scharnierbandgliedern 9 und den benachbarten inneren Laschen 3.

Abweichend von dem Ausführungsbeispiel gemäß Fig. 1 können die inneren und äußeren Laschen der beiden Laschenketten eine der Laschenstärke entsprechende Abkröpfung erhalten (vgl. Fig. 7). Hierdurch ergeben sich gleiche Abstände zwischen den Scharnierbandgliedern 9 und den inneren Laschen (wobei innere und äußere Laschen gleichartig und spiegelbildlich ausgebildet sind).

Bei dem in Fig. 8 dargestellten weiteren Ausführungsbeispiel sind die inneren Laschen 3, 3″ abwechselnd gerade bzw. an beiden Enden 3″a, 3″b gekröpft, während die äußeren Laschen 4 sämtlich gerade ausgebildet sind.

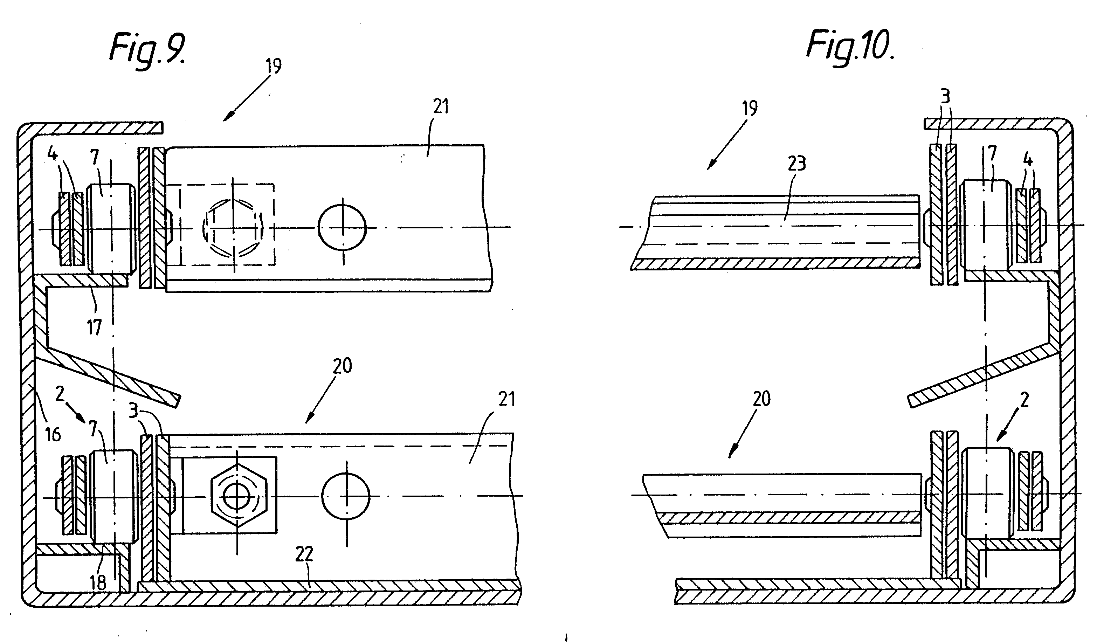

Der erfindungsgemäße Späneförderer kann wahlweise als Kratzerförderer oder als Bandförderer ausgebildet werden. Die Fig. 9 und 10 veranschaulichen diese beiden Möglichkeiten, wobei Fig. 9 die Ausbildung als Kratzerförderer und Fig.10 die Ausbildung als Bandförderer zeigt.

In beiden Fällen findet dasselbe Gehäuse 16 Verwendung, das Führungsprofile 17, 18 für das Obertrum 19 bzw. das Untertrum 20 des Späneförderers enthält.

Die Rollen 7 der Laschenketten laufen auf den Führungsprofilen 17, 18. Der nach unten über das Führungsprofil 17 bzw. 18 vorstehende Teil der inneren Laschen 3 dient dabei zur seitlichen Lagebegrenzung des Späneförderers im Gehäuse 16, indem er bei einer bestimmten Querverschiebung zur Anlage am Führungsprofil 17 bzw. 18 kommt.

Bei der Ausbildung als Kratzerförderer (Fig. 9) enthalten die einzelnen Scharnierbandglieder Kratzerstege 21, die im Bereich des Untertrums 20 auf einem ortsfest im Boden des Gehäuses 16 angeordneten Verschleißband 22 laufen und hierbei auf dem Verschleißband 22 liegende Späne abtransportieren. Die Höhe der Kratzerstege 21 entspricht dabei der Höhe der inneren Laschen 3.

Bei der Ausbildung als Bandförderer (Fig.10) sind die einzelnen Glieder des Scharnierbandes 1 mit Mitnehmerstegen 23 versehen, die im Obertrum 19 Späne abtransportieren.

Bei beiden Ausführungen (als Kratzerförderer gemäß Fig. 9 bzw. als Bandförderer gemäß Fig.10) sind das Gehäuse 16, die Führungsprofile 17, 18 sowie die Laschenketten 2 identisch. Die Herstellung beider Ausführungen sowie ein etwaiger späterer Umbau des Kratzerförderers in einen Bandförderer (oder umgekehrt) sind daher auf besonders einfache Weise möglich.

**Ansprüche**

1. Späneförderer, bestehend aus einem mit zwei Seitenborden versehenen Scharnierband (1) sowie zwei außerhalb der Seitenborde angeordneten Laschenketten (2), wobei das Scharnierband (1) und die beiden Laschenketten (2) gleiche Achsteilung aufweisen, dadurch gekennzeichnet, daß die Scharnierbandglieder (9) an ihren quer zur Förderrichtung verlaufenden Kanten über die ganze Breite des Scharnierbandes durchlaufende Gelenkachsteile (9b, 9c) aufweisen, von denen der eine mit einer teilzylindrischen Außenfläche (9b′) und der andere mit einer komplementär ausgebildeten, teilzylindrischen Innenfläche (9c′) versehen ist.

2. Späneförderer nach Anspruch 1, dadurch gekennzeichnet, daß die inneren Laschen (3) der beiden Laschenketten (2) zugleich die Seitenborde des Scharnierbandes (1) bilden und die Scharnierbandglieder (9) über die inneren Laschen (3) der beiden Laschenketten miteinander verbunden sind.

3. Späneförderer nach Anspruch 2, dadurch gekennzeichnet, daß die Scharnierbandglieder (9) mit den inneren Laschen (3) der beiden Laschenketten (2) verschweißt, vernietet oder verschraubt sind.

4. Späneförderer nach Anspruch 2, dadurch gekennzeichnet, daß die inneren Laschen (3) der beiden Laschenketten (2) eine größere Höhe als die äußeren Laschen (4) aufweisen.

5. Späneförderer nach Anspruch 1, dadurch gekennzeichnet, daß die Laschen (3, 4) der beiden Laschenketten (2) eben ausgebildet sind.

6. Späneförderer nach Anspruch 1, dadurch gekennzeichnet, daß alle inneren und äußeren Laschen (3, 4) gleichartig ausgebildet sind und eine der Laschenstärke entsprechende Abkröpfung aufweisen, wobei rechte und linke Laschen spiegelbildlich zueinander gestaltet sind.

7. Späneförderer nach Anspruch 1, dadurch gekennzeichnet, daß die inneren Laschen (3, 3″) abwechselnd gerade bzw. an beiden Enden gekröpft und die äußeren Laschen (4) sämtlich gerade ausgebildet sind.

8. Späneförderer nach Anspruch 1, dadurch gekennzeichnet, daß die inneren und äußeren Laschen (3, 4) an den Gelenkstellen paarweise durch zwei koaxial und relativ zueinander drehbeweglich angeordnete Buchsen (5, 6) miteinander verbunden sind, wobei in der inneren Buchse (6) ein Kunststoffbolzen (8) angeordnet ist, der mit einem über die äußere Lasche vorstehenden Kopf eine Bewegung des Späneförderers quer zur Förderrichtung begrenzt.

9. Späneförderer nach Anspruch 1, dadurch gekennzeichnet, daß die inneren und äußeren Laschen (3, 4) der beiden Laschenketten (2) an den Gelenkstellen paarweise durch eine Buchse (5) und einen diese Buchse (5) durchsetzenden und relativ zur Buchse drehbeweglichen Bolzen (15) miteinander verbunden sind.

10. Späneförderer nach Anspruch 1, dadurch gekennzeichnet, daß die mit einer teilzylindrischen Außenfläche (9b′) versehenen Gelenkachsteile (9b) der Scharnierbandglieder (9) einen annähernd zylindrischen Innenraum (9d) aufweisen, in dessen Enden je ein Gelenkachsteil (z. B. 8, 15) der beiden Laschenketten (2) eingreift.

11. Späneförderer nach Anspruch 4, bei dem die Laschenketten (2) mit zwischen den inneren und äußeren Laschen (3, 4) angeordneten Rollen (7) versehen sind, die auf einem ortsfesten Führungsprofil (17, 18) laufen, dadurch gekennzeichnet, daß die Höhe der inneren Laschen (3) größer als die Höhe der Rollen (7) ist, wobei die inneren Laschen sowohl auf der Oberseite als auch auf der Unterseite des Scharnierbandes (1) über die Rollen (7) nach oben bzw. unten vorstehen und zur seitlichen Lagebegrenzung des Späneförderers gegenüber dem ortsfesten Führungsprofil (17, 18) dienen.

12. Späneförderer nach Anspruch 1, dadurch gekennzeichnet, daß das Gehäuse (16) und die Führungsprofile (17, 18) für die Laschenkette (2) derart ausgebildet sind, daß als Späneförderer wahlweise ein Kratzerförderer oder ein Bandförderer - mit jeweils gleich gestalteter Laschenkette (2) - verwendbar ist.

# Fig.1.

# Fig.3.

# Fig.2.

# Fig.4.

*Fig.5.*

*Fig.7.*

4

3

*Fig.8.*

4    4

3    3″a    3″    3″b

*Fig.6.*

4    15    4

5

3

**Fig.10.**

**Fig.9.**

## DOCUMENTS CONSIDERED TO BE RELEVANT

EP 88109224.1

| Category | Citation of document with indication, where appropriate, of relevant passages | Relevant to claim | CLASSIFICATION OF THE APPLICATION (Int. Cl.4) |
|---|---|---|---|
| X<br>A | DE - A - 2 061 400 (KNAUST)<br>   * Gesamt * | 1,5,9,<br>10<br>2,6,11 | B 65 G 17/06 |
| Y<br>A | US - A - 3 866 743 (JORGENSEN)<br>   * Fig. 1,3 * | 1,2,4,<br>9,10<br>6 | |
| Y | EP - A1 - 0 009 729 (FISCHER)<br>   * Ansprüche 1,2 * | 1,2,4,<br>9,10 | |
| Y | DE - A1 - 2 912 789 (WILKES)<br>   * Fig. 4,6 * | 1,5 | |
| Y | DE - A1 - 3 621 544 (MOMOSE)<br>   * Fig. 14 * | 1,5 | **TECHNICAL FIELDS SEARCHED (Int. Cl.4)**<br><br>B 65 G |
| A | EP - A1 - 0 001 257 (POLYSIUS)<br>   * Fig. 2 * | 1 | |
| A | DE - B - 1 188 508 (HAUHINCO)<br>   * Fig. 1 * | 1 | |

The present search report has been drawn up for all claims

| Place of search | Date of completion of the search | Examiner |
|---|---|---|
| VIENNA | 23-09-1988 | BAUMGARTNER |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503. 03.82